# EUROPEAN PATENT APPLICATION

(11) **EP 4 683 176 A1**
(43) Date of publication of application: **21.01.2026**
(21) Application number: 25185005.3
(22) Date of filing: 24.06.2025
(51) Int. Cl.: H02K 1/2791, H02K 15/026, H02K 29/03, H02K 1/27915

(54) **PERMANENT MAGNET EXTERNAL ROTOR FOR ELECTRIC MOTOR, ELECTRIC MOTOR COMPRISING SAID ROTOR AND METHOD FOR MANUFACTURING SAID EXTERNAL ROTOR**

(30) Priority: 16.07.2024 CN 202421683100 U
(71) Applicant: Askoll Holding S.r.l., 36031 Povolaro di Dueville (Vicenza) (IT)
(72) Inventor: MARIONI, Elio, 36031 Dueville (VI) (IT)
(74) Representative: Botti & Ferrari S.p.A.

(57) **Abstract**

Permanent magnet external rotor (1) for an electric motor (10), comprising a cup-shaped body (2) provided with a bottom (20) and a side wall (21); a plurality of arc-shaped magnetic wedges (3) arranged next to each other so as to define an annular configuration, said cup-shaped magnetic wedges being fixed inside said cup-shaped body (2); and a metal insert (4) arranged between said side wall (21) and said plurality of arc-shaped magnetic wedges (3) so as to define the closure of a magnetic circuit of the electric motor (10); each of said plurality of arc-shaped magnetic wedges (3) comprising at least two opposite tapering portions (3B), wherein the cross-section of said tapering portions (3B) gradually decreases from a maximum section (S1) to a tip section (S2).

## Description

### Field of application

The present invention relates, according to its more general aspect, to a permanent magnet external rotor, in particular for a synchronous electric motor, and to an electric motor comprising such a component.

The technical field of the invention therefore concerns electric machines. Electric motors with permanent magnet external rotors may find a useful application in various industrial sectors; more specifically, the present invention has a preferred application in the industrial sector of large-size electric household appliances, for example in the motors for operating the drum and/or the fans in washing machines or in laundry drying machines.

### Prior art

Electric motors with a permanent magnet rotor are known in the art and at present are used in a plurality of applications, including the operation of components and pumps in electric household appliances.

The conventional configuration of these like other motors comprises an internal rotor rotating inside a fixed stator; in some cases, however, it is preferred to use an external, cup-shaped, rotor which surrounds a central stator. This solution has proved for example to be particularly advantageous, allowing a substantial reduction in the dimensions, during the manufacture of a motor unit which operates fan and drum of laundry drying machines.

The external rotor of these electric motors, in particular in the sectors such as that of electric household appliances in which the small dimensions and production costs of the components are critical, may be made from a plurality of ferrite magnetic wedges arranged next to each other so as to define a ring. The ring is inserted inside the aforementioned cup-shaped structure, which may be formed as a cap made of plastic material. It is obviously indispensable to insert a metal ring on the outside of the magnets, in order to close the magnetic circuit and allow operation of the electric machine.

Even though the choice of the plurality of wedges represents some manufacturing challenges, it can be more cost-effective compared to the alternative use of a continuous plasto-ferrite ring, since the latter requires precise and costly machine-grinding of the cylindrical inner surface.

However, the plurality of magnetic wedges still have the drawback of defining a sharp transition from one magnetic pole to the next, which translates in motor vibrations.

The technical problem underlying the present invention is therefore that of devising an improved external rotor with reduced vibrations.

### Summary of the invention

The technical problem described above is solved by a permanent magnet external rotor for an electric motor, comprising a cup-shaped body provided with a bottom and a side wall; a plurality of arc-shaped magnetic wedges arranged next to each other, defining an annular configuration and fixed inside said cup-shaped body; and a metal insert - which is preferably ferromagnetic - arranged between said side wall and said at least one magnet so as to define the closure of a magnetic circuit of the electric motor.

Each of the plurality of arc-shaped magnetic wedges comprises at least two opposite tapering portions, wherein the cross-section of said tapering portions gradually decreases from a maximum section to a tip section.

This solution ensure to make the polar transition less abrupt and therefore reduce the motor's vibrations.

In other words, this shape of the wedges results in a more gradual variation of the magnetic field and without sharp discontinuities when transitioning from a pole to the next, with a consequent reduction, as said, in motor's vibrations and noise.

Preferably, the cross-section decreases along the whole arc length of said tapering portions, each tapering portion spanning an arc length which is at least 1/8, most preferably at least 1/4, of the total arc length of the arc-shaped magnetic wedge.

Preferably, the maximum section is the cross-section at the midpoint of the arc defined by the arc-shaped magnetic wedge.

Preferably, the tip section is zero, meaning that the tapering portion taper towards a sharp angle defining the tip of the wedge.

Preferably, said arc-shaped magnetic wedges are symmetrical about a radial plane.

Preferably, said tapering portions have an intrados surface which is convex at least along most of their arc length. This obviously means that the intrados of the tapering portions departs from the usual cylindrical shape of the wedge, therefore gradually reducing the thickness of the wedge towards its free ends.

Preferably, said arc-shaped magnetic wedges have an extrados surface which is cylindrical along most of the arc length of the magnetic wedge.

From the above, it can be understood that the intrados and extrados surfaces are shaped differently: while the intrados surface mostly departs from the cylindrical shape, the extrados surface mostly maintains said cylindrical shape so that it can define an external ring to be contained within the metal insert.

In other words, the gradual reduction of the thickness of the magnetic wedge is due to the modified shape of the intrados surface, while the extrados surface substantially corresponds to that of the prior art devices.

Said arc-shaped magnetic wedges may or may not comprise a central portion of constant cross-section between the tapering portions.

Preferably, the metal insert is formed by a helical spring fitted around the annular configuration defined by the plurality of arc-shaped magnetic wedges.

The helical spring, namely a spirally wound metal body, adapts elastically to the annular configuration of the plurality of arc-shaped magnetic wedges onto which it is fitted, but on the other hand ensures the continuity of material along the entire circumference and the consequent closure of the magnetic circuit.

The metal insert, preferably said helical spring, ensures perfect joining together of the magnet, consisting of said plurality of arc-shaped magnetic wedges, and ferromagnetic insert, while minimizing the difficulties associated with manufacture of the assembly.

The use of a helical spring is furthermore advantageous when a plurality of magnetic wedges rather than a single toroidal magnet is used. In this case, in fact, the spring grips the annular structure defined by the adjacent magnets and helps keep the said magnets in position during the operations for overmoulding the outer cap. The alignment of the extrados surfaces of the successive wedges is thus ensured, making the constructional step easier and more efficient.

Preferably, at least the side wall of said cup-shaped body is made of a plastic material overmoulded onto the plurality of arc-shaped magnetic wedges and onto the metal insert. It is obviously preferable, for reasons of manufacturing economy, to make the entire cup-shaped body as a single overmoulded component; alternatively, it is possible to consider making only the side wall of plastic and then joining it together with other components of the cup-shaped body which are made separately.

Preferably, said cup-shaped body comprises a flange and an internal shoulder which axially confine said metal insert at the opposite ends, exerting a retaining action on the spring.

Preferably, the flange and the internal shoulder also cover, wholly or partly, the opposite axial ends of the annular configuration defined by the plurality of arc-shaped magnetic wedges.

Again preferably, the at least one magnet is left free of the overmoulded plastic along its inner surface, arranged to face the air gap in the completed electric motor.

The helical spring which defines the metal insert has preferably, in the rest configuration, an internal diameter smaller than the external diameter of the annular configuration defined by the at least one magnet, such that said helical spring is elastically deformed when fitted onto the at least one magnet.

It is also pointed out that the helical spring has, in the rest configuration, windings packed together and a length substantially equal to the axial length of the toroidal magnet. An armature which surrounds substantially completely the underlying permanent magnet is thus obtained.

The windings of the helical spring preferably have a square or rectangular cross-section so as to ensure as far as possible a uniform thickness of the magnetic circuit which encloses the rotor poles.

It is pointed out that the side wall of the cup-shaped body is preferably cylindrical.

The bottom, on the other hand, may comprise a central hub connected, by means of a continuous cap or a plurality of radial arms, to the side wall. The continuous cap, where present, may have its concavity which is directed towards the side wall and on which projecting radial ribs may be provided.

The aforementioned technical problem is also solved by an electric motor comprising an internal stator provided with a plurality of poles and an external rotor of the type defined above, mounted rotatably on top of said internal stator, wherein the annular configuration of said plurality of magnetic wedges_surrounds the poles with the arrangement of an air gap in between.

Having a plurality of magnetic wedges, for example a helical spring, during the course of overmoulding, grips and keeps in the annular configuration the said wedges, acting against the thrusting forces of the injected material which could otherwise displace the elements.

Preferably, the overmoulding mould is designed to keep in position the two axial ends of the helical spring which otherwise could be deformed by the flow of the injected material during the injection moulding operations.

Further characteristic features and advantages of the present invention will emerge from the description, provided hereinbelow, of two preferred examples of embodiment provided by way of a non-limiting example with reference to the accompanying drawings.

### Brief description of the drawings

Figure 1 shows a side view of a motor unit for a laundry drier, comprising an electric motor according to the present invention;

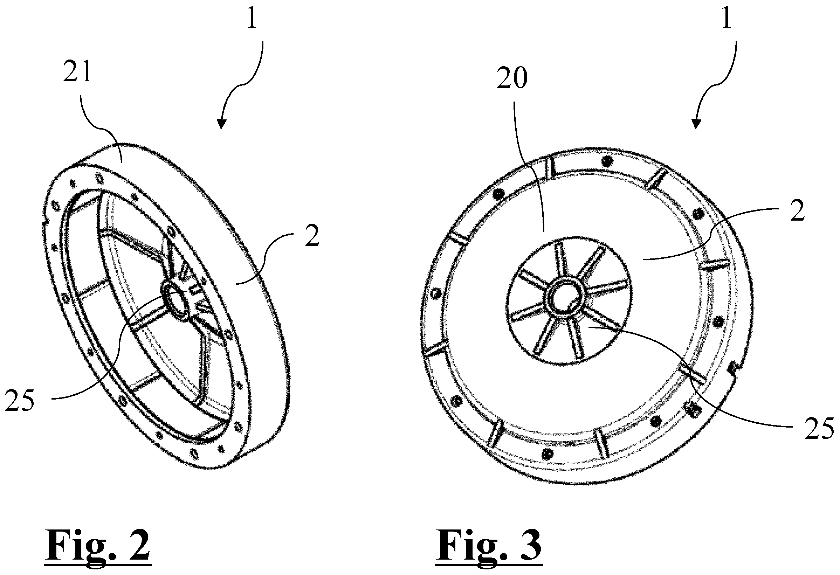

Figure 2 shows a perspective view of an external rotor in accordance with the present invention;
Figure 3 shows a perspective view of the external rotor of Figure 2 from a different angle;

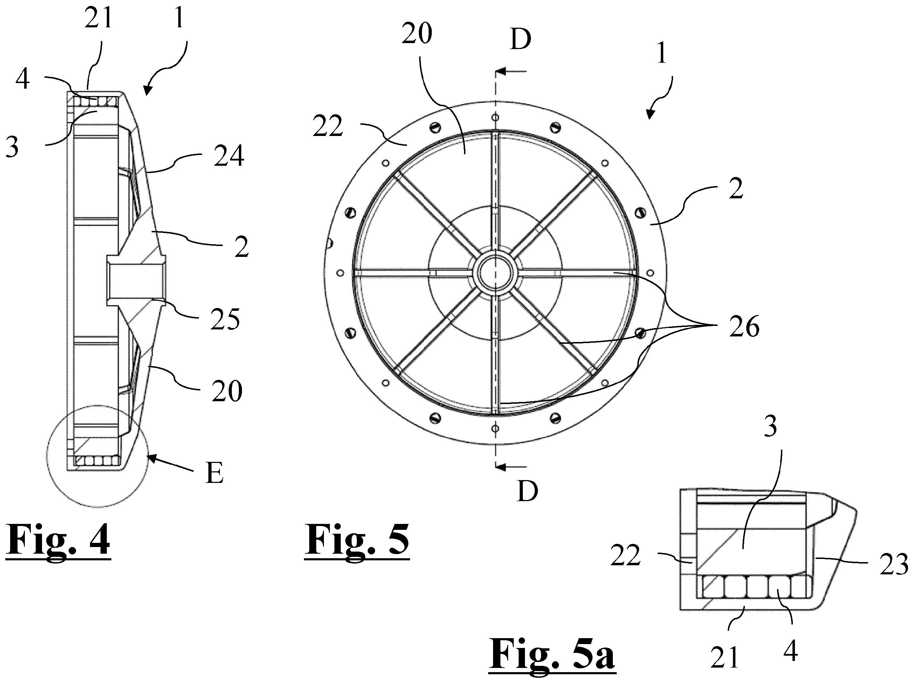

Figure 4 shows a front view of the external rotor according to Figure 2;
Figure 5 shows a side view of the external rotor in accordance with the present invention, cross-sectioned along the plane D-D indicated in Figure 4;
Figure 5a shows a detail identified by D in Figure 5, suitably enlarged so as to allow the constructional details to be seen more clearly;

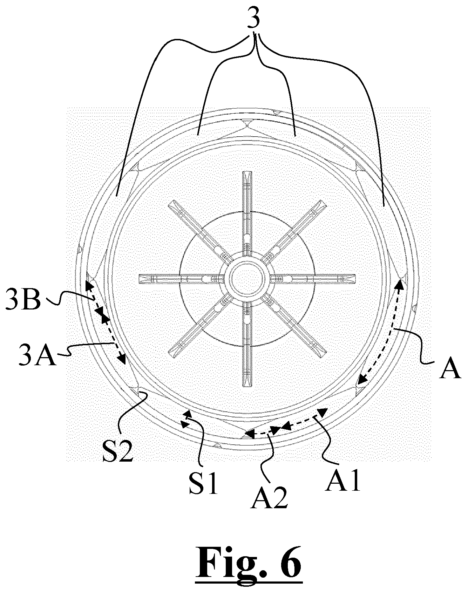

Figure 6 shows a section of the external rotor of Figure 6 in accordance with the present invention.

### Detailed Description

With reference to the attached Figures, 1 denotes in general a first embodiment of a permanent magnet external rotor for an electric motor, in particular for a synchronous electric motor.

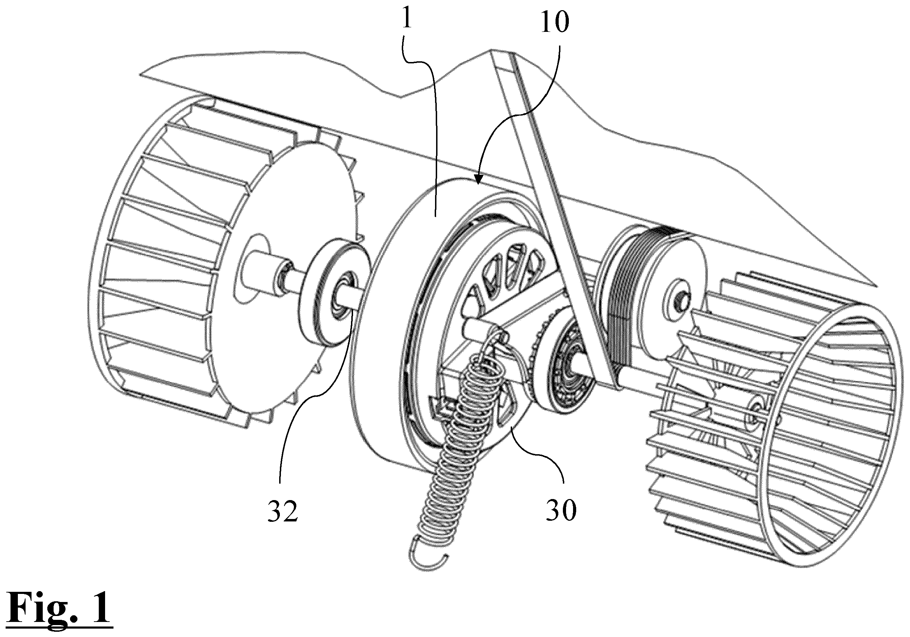

The electric motor according to the present invention is identified by 10 and shown, in the attached Figure 1, in the preferred context of an application involving driving of the drum and fans in a laundry drying machine.

In a manner known per se, the electric motor 10 is a synchronous electric motor designed to rotationally drive a drive shaft 32 on which, in the example of embodiment shown here, fans and a pulley for operating the drum of the laundry drying machine are keyed. The electric motor has an internal stator 30, comprising a plurality of poles - not shown in the figures - on which the external rotor 1, integral with the drive shaft 32, is rotatably mounted. The external rotor 1 surrounds, with an air gap situated in between, the poles of the internal stator 30.

The external rotor 1 according to the invention uses a plurality of arc-shaped magnetic wedges 3 which are arranged next to each other so as to define an annular configuration.

In other words, each single magnetic wedge 3 has the form of a circle arc and an axial thickness commensurate with that of the side wall. The plurality of arc-shaped magnetic wedges 3 are arranged alongside each other therefore defining a cylindrical body.

The plurality of arc-shaped magnetic wedges 3 used to form the external rotor 1 are eight in number; it is obviously possible to modify this number depending on the specific design requirements.

Each of the plurality of arc-shaped magnetic wedges 3 comprises a central portion 3A having a maximum section S1 and two opposite tapering portions 3B having a decreasing section from the maximum section S1 to a tip section S2, which in the present case is zero.

The tapering portions 3B have a decreasing section due to the fact that their intrados has a convex shape which departs from the usual concave, cylindrical shape of the intrados surface of the central portion 3A. On the contrary, the extrados of the tapering portions 3B substantially follows a cylindrical surface.

Each of said two opposite lateral portions 3B spans an arc length A2 higher than 1/8, preferably about 1/4, of the total arc length A of the relative arc-shaped magnetic wedge 3. The central portion 3A consequently spans an arc length A1 of about 1/2 of the total arc length.

The "arc length" is the distance between two points along the "total arc length" A, this distances being measured on the circumference passing through the median longitudinal section spanning from tip to tip of each wedge 3.

This solution makes the polar transition less abrupt and therefore reduces the motor's vibrations.

In other words, this shape of the wedges results in a more gradual variation of the magnetic field and without abrupt discontinuities, with a consequent reduction in motor's vibrations and noise.

Moreover, each wedge 3 is formed in particular as a plasto-ferrite ring and onto which a metal insert 4 consisting, preferably but not necessarily, of a helical spring made of ferromagnetic material is fitted. A plastic cap which defines a cup-shaped body 2 of the rotor is overmoulded on top of the assembly formed by the plurality of magnetic wedges 3 and the helical spring.

The helical spring has windings 40 with a square cross-section which are packed together in the rest configuration such that it is arranged on top of the plurality of magnetic wedges 3 in the manner of a ferromagnetic covering with a substantially uniform thickness, thus suitably closing the magnetic circuit on the rotor. The windings 40, which in the preferred embodiment shown here are five in number. It is also pointed out that the internal diameter d in the rest condition of the helical spring has a value slightly smaller than the external diameter D of the annular configuration of the plurality of magnetic wedges 3; in this way the helical spring is deformed elastically in the radial direction when it is fitted on top of the magnet.

The cup-shaped body 2 which is overmoulded using plastic material has a bottom 20, which is designed to cover laterally the electric motor 10 and which is connected to a substantially cylindrical side wall 21, projecting in the direction of the opening of the cup-shaped body 2.

The bottom 20 comprises a hub 25, which in the embodiment shown has a through-hole for keying onto the drive shaft 32, and a continuous cap 24, which is preferably concave towards the inside of the cup-shaped body 2 and which is connected to the side wall 21.

The continuous cap 24 has on its concave inner surface a plurality of radial ribs 26 extending towards the peripheral edge; similar ribs are also present on the outer surface of the bottom 20 but only involve the hub portion 25.

The continuous cap 24 defines a shoulder 23 opposite which a front flange 22 of the side wall 21 is situated. The flange 22 and shoulder 23 axially enclose the assembly formed by the plurality of arc-shaped magnetic wedges 3and the helical spring fitted on top of it. The helical spring is moreover radially confined by the side wall 21 and is therefore completely embedded inside the plastic overmoulding. On the other hand, the plurality of arc-shaped magnetic wedges 3 have a free inner side designed to the face the air gap of the electric motor 10.

The assembly consisting of the arc-shaped magnetic wedges 3 and the superimposed metal spring is overmoulded with a plastic cup-shaped body 2 so as to define the final structure of the external rotor 1.

It is pointed out that the overmoulding mould used in the production is designed to keep in position the two axial ends of the helical spring which otherwise could be deformed by the flow of the injected material during the injection moulding operations.

Obviously a person skilled in the art, in order to satisfy any specific requirements which might arise, may make numerous modifications and variations to the motor and the manufacturing method described above, all of which are contained moreover within the scope of protection of the invention, as defined by the following claims.

## Claims

1. Permanent magnet external rotor (1) for an electric motor (10), comprising a cup-shaped body (2) provided with a bottom (20) and a side wall (21); a plurality of arc-shaped magnetic wedges (3) arranged next to each other so as to define an annular configuration, said cup-shaped magnetic wedges being fixed inside said cup-shaped body (2); and a metal insert (4) arranged between said side wall (21) and said plurality of arc-shaped magnetic wedges (3) so as to define the closure of a magnetic circuit of the electric motor (10); **characterized in that** each of said plurality of arc-shaped magnetic wedges (3) comprises at least two opposite tapering portions (3B), wherein the cross-section of said tapering portions (3B) gradually decreases from a maximum section (S1) to a tip section (S2).

2. Permanent magnet external rotor (1) according to claim 1, wherein the cross-section decreases along the whole arc length of said tapering portions (3B), each tapering portion (3B) spanning an arc length which is at least 1/8 of the total arc length of the arc-shaped magnetic wedge (3).

3. Permanent magnet external rotor (1) according to one of the preceding claims, wherein each tapering portion (3B) spans an arc length which is at least 1/4 of the total arc length of the arc-shaped magnetic wedge (3).

4. Permanent magnet external rotor (1) according to one of the preceding claims, wherein the maximum section (S1) is the cross-section at the midpoint of the arc defined by the arc-shaped magnetic wedge.

5. Permanent magnet external rotor (1) according to one of the preceding claims, wherein the tip section (S2) is zero.

6. Permanent magnet external rotor (1) according to claim 5, wherein the free ends of the tapering portions (3B) define a tip having a sharp angle.

7. Permanent magnet external rotor (1) according to one of the preceding claims, wherein said arc-shaped magnetic wedges (3) are symmetrical about a radial plane.

8. Permanent magnet external rotor (1) according to one of the preceding claims, wherein said tapering portions (3B) have an intrados surface which is convex at least along most of their arc length.

9. Permanent magnet external rotor (1) according to one of the preceding claims, wherein said arc-shaped magnetic wedges (3) have an extrados surface which is cylindrical along most of the arc length of the magnetic wedge (3).

10. Permanent magnet external rotor (1) according to one of the preceding claims, wherein said arc-shaped magnetic wedges (3) further comprise a central portion (3A) of constant cross-section between the tapering portions (3B).

11. Electric motor (10) comprising an internal stator (30) provided with a plurality of poles and an external rotor (1) according to one of the preceding claims, mounted rotatably on top of said internal stator (30), wherein said plurality of arc-shaped magnetic wedges (3) surrounds the poles with the arrangement of an air gap in between.
